# EUROPEAN PATENT APPLICATION

(11) **EP 4 507 445 A1**
(43) Date of publication of application: **12.02.2025**
(21) Application number: 22947752.6
(22) Date of filing: 16.12.2022
(51) Int. Cl.: H04W 76/14, H04W 4/80

(54) **BLUETOOTH DEVICE CONFIGURATION METHOD AND APPARATUS, AND ELECTRONIC DEVICE AND STORAGE MEDIUM**

(30) Priority: 23.06.2022 CN 202210725584
(71) Applicant: GUANGDONG OPPO MOBILE TELECOMMUNICATIONS CORP., LTD., Dongguan, Guangdong 523860 (CN)
(72) Inventor: BAO, Jianquan, Dongguan, Guangdong 523860 (CN)
(74) Representative: Novagraaf Technologies
(86) International application number: PCT/CN2022/139550
(87) International publication number: WO 2023/246017

(57) **Abstract**

Disclosed in the embodiments of the present application are a Bluetooth device configuration method and apparatus, and an electronic device and a storage medium. The method is applied to a first electronic device. The method comprises: acquiring target combination identification information; and sending the target combination identification information to a first Bluetooth device, such that the first Bluetooth device configures combination identification information to be the target combination identification information, wherein the target combination identification information is used for indicating a target Bluetooth device set. By means of the Bluetooth device configuration method and apparatus, the electronic device and the storage medium, a Bluetooth device can be dynamically and flexibly added to a Bluetooth device set for use, thereby satisfying the usage requirements of a user.

## Description

The present application claims priority to Chinese Patent Application No. 202210725584.3, entitled "BLUETOOTH DEVICE CONFIGURATION METHOD, BLUETOOTH DEVICE CONFIGURATION APPARATUS, ELECTRONIC DEVICE, AND STORAGE MEDIUM", filed June 23, 2022, which is herein incorporated by reference in its entirety.

### TECHNICAL FIELD

The present disclosure relates to the field of communication technologies, and in particular to a Bluetooth device configuration method, a Bluetooth device configuration apparatus, an electronic device, and a storage medium.

### BACKGROUND

Bluetooth is a radio technology that supports short-distance communication between devices. It may realize wireless information exchange between multiple electronic devices that support Bluetooth transmission, making data transmission between electronic devices faster and more efficient. Many Bluetooth devices on the market may form a device collection for use. For example, Bluetooth headphones, Bluetooth speaker systems, etc. often operate collaboratively as a Bluetooth device collection. When a new Bluetooth device needs to be added to the Bluetooth device collection due to loss or failure of individual Bluetooth device, or because the number of the Bluetooth devices in the Bluetooth device collection needs to increase, there is a lack of effective configuration methods.

### SUMMARY OF THE DISCLOSURE

Embodiments of the present disclosure provide a Bluetooth device configuration method, a Bluetooth device configuration apparatus, an electronic device, and a storage medium, which may dynamically and flexibly add a Bluetooth device to a Bluetooth device collection for use, thereby meeting user's needs.

The embodiments of the present disclosure provide a Bluetooth device configuration method, and the Bluetooth device configuration method is performed by a first electronic device. The method includes:
obtaining target set identity information; and
sending the target set identity information to a first Bluetooth device, so that the first Bluetooth device configures set identity information as the target set identity information, and the target set identity information is configured to indicate a target Bluetooth device collection.

The embodiments of the present disclosure provide a Bluetooth device configuration method, and the Bluetooth device configuration method is performed by a first electronic device. The method includes:
receiving target set identity information sent by the first electronic device, wherein the target set identity information is configured to indicate a target Bluetooth device collection; and
configuring set identity information of the first Bluetooth device as the target set identity information.

The embodiments of the present disclosure provide a Bluetooth device configuration apparatus, and the Bluetooth device configuration apparatus is performed by a first electronic device. The Bluetooth device configuration apparatus includes an identity acquisition module and an identity sending module.

The identity acquisition module is configured to obtain target set identity information.

The identity sending module is configured to send the target set identity information to a first Bluetooth device, so that the first Bluetooth device configures set identity information as the target set identity information, and the target set identity information is configured to indicate a target Bluetooth device collection.

The embodiments of the present disclosure provide a Bluetooth device configuration apparatus, and the Bluetooth device configuration apparatus is performed by a first Bluetooth device. The Bluetooth device configuration apparatus includes an identity receiving module and a configuration module.

The identity receiving module is configured to receive target set identity information sent by the first electronic device, wherein the target set identity information is configured to indicate a target Bluetooth device collection.

The configuration module is configured to configure set identity information of the first Bluetooth device as the target set identity information.

The embodiments of the present disclosure provide an electronic device including a processor and a memory. The memory stores a computer program. In response to the computer program being executed by the processor, the method of any one of above embodiments is implemented.

The embodiments of the present disclosure provide a computer-readable storage medium storing a computer program. In response to the computer program is executed by a processor, the method of any one of above embodiments is implemented.

The embodiments of the present disclosure provide the Bluetooth device configuration method, the Bluetooth device configuration apparatus, the electronic device, and the storage medium. The first electronic device obtains the target set identity information and sends the target set identity information to the first Bluetooth device. The first Bluetooth device receives the target set identity information sent by the first electronic device and configures the set identity information of the first Bluetooth device as the target set identity information. The target set identity information is configured to indicate the target Bluetooth device collection, so that the first Bluetooth device may be successfully added to the target Bluetooth device collection after configuring the set identity information. The set identity information of the first Bluetooth device can be configured by using the target set identity information sent by the first electronic device, which may dynamically and flexibly add the first Bluetooth device to the target Bluetooth device collection for use, meeting the user's usage needs.

### BRIEF DESCRIPTION OF THE DRAWINGS

In order to more clearly illustrate the technical solutions in some embodiments of the present disclosure, hereinafter, a brief introduction will be given to the accompanying drawings that are used in the description of some embodiments. Obviously, the accompanying drawings in the description below are merely some embodiments of the present disclosure. For those of ordinary skill in the art, other accompanying drawings may be obtained based on these accompanying drawings without any creative efforts.
FIG. 1A is an application scenario view of a Bluetooth device configuration method in some embodiments of the present disclosure.
FIG. 1B is an application scenario view of the Bluetooth device configuration method in some embodiments of the present disclosure.
FIG. 1C is a time sequence schematic view of the Bluetooth device configuration method in some embodiments of the present disclosure.
FIG. 2A is a flow chart of the Bluetooth device configuration method in some embodiments of the present disclosure.
FIG. 2B is a structural schematic view of an LE Audio broadcast signal in some embodiments of the present disclosure.
FIG. 3A is a time sequence schematic view of the Bluetooth device configuration method in some embodiments of the present disclosure.
FIG. 3B is a time sequence schematic view of the Bluetooth device configuration method in some embodiments of the present disclosure.
FIG. 4A is a time sequence schematic view of the Bluetooth device configuration method in some embodiments of the present disclosure.
FIG. 4B is a time sequence schematic view of the Bluetooth device configuration method in some embodiments of the present disclosure.
FIG. 5A is a time sequence schematic view of the Bluetooth device configuration method in some embodiments of the present disclosure.
FIG. 5B is a time sequence schematic view of the Bluetooth device configuration method in some embodiments of the present disclosure.
FIG. 6A is a time sequence schematic view of the Bluetooth device configuration method in some embodiments of the present disclosure.
FIG. 6B is a time sequence schematic view of the Bluetooth device configuration method in some embodiments of the present disclosure.
FIG. 7 is a flow chart of the Bluetooth device configuration method in some embodiments of the present disclosure.
FIG. 8 is a block view of a Bluetooth device configuration apparatus in some embodiments of the present disclosure.
FIG. 9 is a block view of the Bluetooth device configuration apparatus in some embodiments of the present disclosure.
FIG. 10 is a structural block view of an electronic device in some embodiments of the present disclosure.

### DETAILED DESCRIPTION

The technical solutions in some embodiments of the present disclosure may be clearly and completely described in conjunction with accompanying drawings in some embodiments of the present disclosure. Obviously, the described embodiments are only a part of the embodiments of the present disclosure, and not all embodiments. Based on the embodiments in the present disclosure, all other embodiments obtained by those of ordinary skill in the art without creative effort are within the scope of the present disclosure.

In the embodiments and drawings of the present disclosure, the terms "including", "comprising", and "having", as well as any variations of the terms "including", "comprising", and "having", are intended to cover non-exclusive inclusions. For example, a process, method, system, product, or device that includes a series of operations or units is not limited to the listed operations or units, but optionally includes operations or units that are not listed, or optionally includes other operations or units that are inherent to the process, method, system, product, or device.

The terms "first", "second", or the like used in the present disclosure may be used to describe various components, but these components are not limited by these terms. These terms are only used to distinguish one component from another component. For example, without departing from the scope of the present disclosure, a first Bluetooth device may be referred to as a second Bluetooth device, and similarly, the second Bluetooth device may be referred to as the first Bluetooth device. The first Bluetooth device and the second Bluetooth device are both Bluetooth devices. However, the first Bluetooth device and the second Bluetooth device are not the same Bluetooth device. The term "plurality" or "multiple" used in the present disclosure refers to two or more than two. The term "and/or" used in the present disclosure refers to one of solutions, or any combination of multiple solutions thereto.

In related art, for a plurality of Bluetooth devices (such as two headphones of a pair of Bluetooth headphones) belonging to the same Bluetooth device collection, the same set identity information is usually written to each Bluetooth device during production, thereby ensuring the plurality of Bluetooth devices may be used collaboratively as the same Bluetooth device collection. When one Bluetooth device of the Bluetooth device collection fails or is lost, the Bluetooth device newly purchased by a user cannot be successfully added to the original Bluetooth device collection, because the set identity information that is written to the newly purchased Bluetooth device during production is different from the set identity information that is written to the Bluetooth device of the Bluetooth device collection during production, which cannot meet the user's needs.

For example, when the user loses the left headphone of the pair of Bluetooth headphones and purchases a new left headphone, the newly purchased left headphone cannot be used in conjunction with the original right headphone.

In some embodiments of the present disclosure, a Bluetooth device configuration method, a Bluetooth device configuration apparatus, an electronic device, and a storage medium are provided, which may dynamically and flexibly add the Bluetooth device to the Bluetooth device collection for use, so as to meet the user's usage needs.

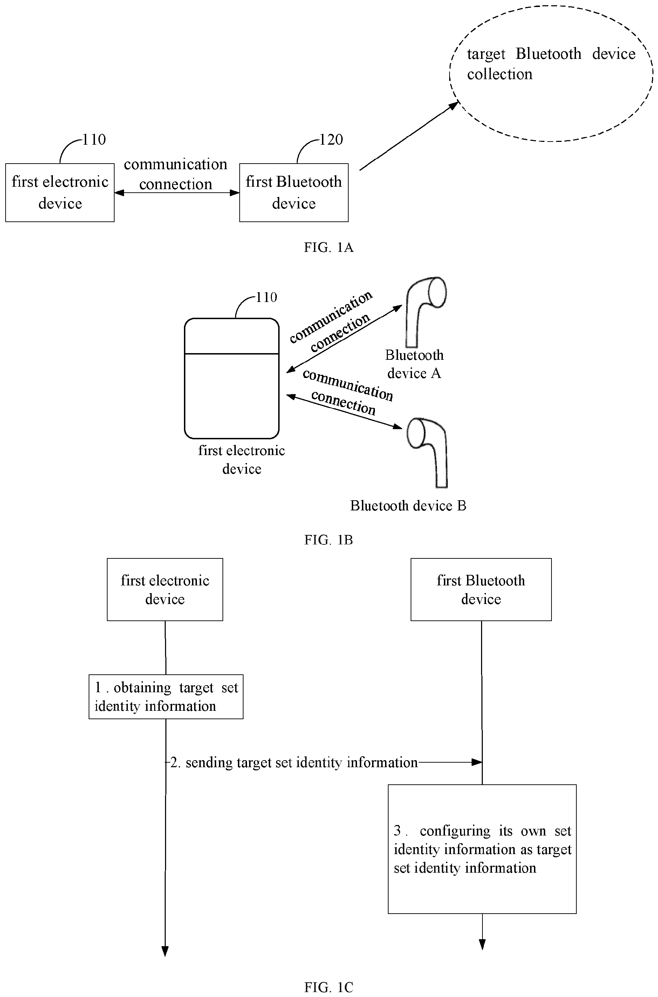

FIG. 1A is an application scenario view of a Bluetooth device configuration method in some embodiments of the present disclosure. As illustrated in FIG. 1A, a first electronic device 110 establishes a communication connection with a first Bluetooth device 120. The first Bluetooth device 120 may include, but is not limited to, a headphone, a mobile phone, a wearable device, a speaker device, or a smart home device, etc. In some embodiments, the first Bluetooth device 120 may be a true wireless stereo (TWS) headphone.

In some embodiments, the first electronic device 110 may be an electronic device capable of establishing a wired or wireless connection with the first Bluetooth device 120. In some embodiments, the first electronic device may be an electronic device used in conjunction with the first Bluetooth device 120. In some embodiments, the first Bluetooth device 120 is the headphone, and the first electronic device 110 is a headphone box, etc., but not limited to these.

In some embodiments, the first electronic device 110 may be a terminal device that establishes the communication connection with the first Bluetooth device 120. The terminal device may include, but is not limited to, the mobile phone, a smart wearable device, a vehicle-mounted terminal, a tablet computer, a personal computer (PC), or a personal digital assistant (PDA), etc.

In some embodiments, the first electronic device 110 may also be the Bluetooth device that the user expects to pair with the first Bluetooth device 120 for synchronized and coordinated use. The first electronic device 110 may be any Bluetooth device in a target Bluetooth device collection that the first Bluetooth device 120 is intended to add, or the first electronic device 110 may be the Bluetooth device to be added to the target Bluetooth device collection. In some embodiments, the first Bluetooth device 120 is a Bluetooth speaker, and the first electronic device 110 may be another Bluetooth speaker that needs to be synchronized and coordinated with the first Bluetooth device 120 for use. In some embodiments, the first Bluetooth device 120 is the headphone, and the first electronic device 110 may be another headphone that needs to be synchronized and coordinated with the first Bluetooth device 120 for use.

Each Bluetooth device may be provided with the set identity information, the set identity information may be configured to identify the Bluetooth device collection to which the Bluetooth device belongs. The Bluetooth devices belonging to different Bluetooth device collections may correspond to different set identity information, while the Bluetooth devices belonging to the same Bluetooth device collection may correspond to the same set identity information. An external device may identify the plurality of Bluetooth devices as one Bluetooth device collection through the set identity information, so that the Bluetooth devices belonging to the same Bluetooth device collection may be coordinated and synchronized for use. In some embodiments, different pairs of Bluetooth headphones correspond to different set identity information, ensuring that there is no confusion during using the Bluetooth headphones. In use, each pair of Bluetooth headphones is different from other pairs of Bluetooth headphones. In the present embodiment, after establishing the communication connection between the first electronic device 110 and the first Bluetooth device 120, the target set identity information may be obtained and sent to the first Bluetooth device 120. After receiving the target set identity information sent by the first electronic device 110, the first Bluetooth device 120 may configure its own set identity information as the target set identity information. That is, the first Bluetooth device 120 is successfully add to the target Bluetooth device collection indicated by the target set identity information. After the first Bluetooth device 120 configures the set identity information as the target set identity information, the first Bluetooth device 120 may form the target Bluetooth device collection with the Bluetooth device that is also configured with the target set identity information. Each Bluetooth device in the target Bluetooth device collection is configured with the target set identity information.

During using the Bluetooth devices belonging to the same Bluetooth device collection, each Bluetooth device in the Bluetooth device collection may send Bluetooth broadcast signals based on the same set identity information. The external device may scan the Bluetooth broadcast signal of at least one Bluetooth device and establish a Bluetooth connection with the Bluetooth device according to an operation instruction. In response to the external device continuing to scan the Bluetooth broadcast signals corresponding to the same set identity information, the external device sends a Bluetooth connection request to the Bluetooth device that sent the Bluetooth broadcast signals. After establishing connections between the external device and all Bluetooth devices in the Bluetooth device collection, each Bluetooth device is assigned possibly different roles (such as playing left channel audio on the left headphone and playing right channel audio on the right headphone).

FIG. 1B is an application scenario view of the Bluetooth device configuration method in some embodiments of the present disclosure. As illustrated in FIG. 1B, the first electronic device 110 may establish communication connections with the Bluetooth device A and the Bluetooth device B respectively. The Bluetooth device A may be the first Bluetooth device mentioned above, while the Bluetooth device B is the Bluetooth device that the user expects to use synchronously and coordinately with the Bluetooth device A. The Bluetooth device A and the Bluetooth device B may be used as one Bluetooth device collection. In some embodiments, both the Bluetooth device A and the Bluetooth device B may be headphone devices, the Bluetooth device A is the left headphone and the Bluetooth device B is the right headphone; or the Bluetooth device A is the right headphone, and the Bluetooth device B is the left headphone.

In some embodiments, the first electronic device 110 may obtain the set identity information currently configured for the Bluetooth device B from the Bluetooth device B, and send the set identity information currently configured for the Bluetooth device B as the target set identity information to the Bluetooth device A. After the Bluetooth device A configures its own set identity information as the target set identity information, the Bluetooth device A and the Bluetooth device B may be identified as belonging to the same Bluetooth device collection for synchronous and coordinated use.

In some embodiments, the first electronic device 110 may also generate target set identity information and send the target set identity information to the Bluetooth device A and the Bluetooth device B respectively, so that both the Bluetooth device A and the Bluetooth device B configure their own set identity information as the target set identity information, thereby ensuring that the set identity information of the Bluetooth device A is the same as the set identity information of the Bluetooth device B. That is, the Bluetooth device A and the Bluetooth device B may be recognized as belonging to the same Bluetooth device collection for synchronous and coordinated use.

The above communication connections may include but are not limited to wireless communication connections, such as Bluetooth. The Bluetooth communication connection may include, but are not limited to, any one of a classic Bluetooth connection, a Bluetooth low energy (BLE) connection, or a LE Audio Bluetooth connection, etc. In some embodiments, the communication connection mentioned above may also be a physical connection method, such as a contact-based touchpoint communication connection, and the specific communication connection method is not specifically limited in the embodiments of the present disclosure.

The number of the Bluetooth devices in the Bluetooth device collection is not limited to two illustrated in FIG. 1B, but may also be 3, or 4, etc. The number is not limited in the embodiments of the present disclosure.

FIG. 1C is a time sequence schematic view of the Bluetooth device configuration method in some embodiments of the present disclosure. As illustrated in FIG. 1C, the Bluetooth device configuration method may include the following operations.

At block 1, the first electronic device obtains the target set identity information.

At block 2, the first electronic device sends the target set identity information to the first Bluetooth device.

At block 3, the first Bluetooth device configures its own set identity information as the target set identity information, the target set identity information is configured to indicate the target Bluetooth device collection.

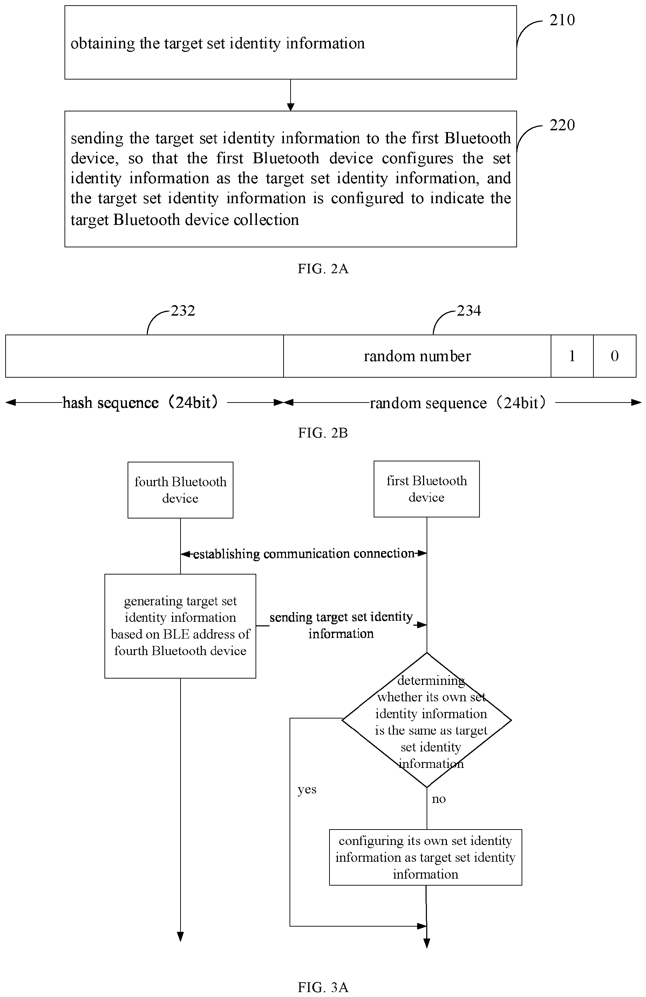

As illustrated in FIG. 2A, in some embodiments, the Bluetooth device configuration method is provided, and the Bluetooth device configuration method may be performed by the first electronic device mentioned above. The Bluetooth device configuration method may include the following operations.

At block 210, the method may include obtaining the target set identity information.

The first Bluetooth device may establish the communication connection with the first electronic device, and the specific connection method of the communication connection is not limited in the embodiments of the present disclosure. Different communication connection methods may be selected for different first electronic devices. In some embodiments, the first electronic device is the terminal device, such as the mobile phone or the tablet computer, the first Bluetooth device may establish the Bluetooth communication connection with the first electronic device. In some embodiments, the first electronic device is a matching device corresponding to the first Bluetooth device, for example, the first Bluetooth device is the headphone and the first electronic device is the headphone box, the user may place the first Bluetooth device in the headphone box to establish a touchpoint communication connection between the first Bluetooth device and the first electronic device. In some embodiments, the first electronic device is the Bluetooth device to be added to the target Bluetooth device collection, and the first Bluetooth device may establish the Bluetooth communication connection with the first electronic device.

After establishing the communication connection with the first Bluetooth device, the first electronic device may obtain the target set identity information and send the target set identity information to the first Bluetooth device. The target set identity information is configured to indicate the target Bluetooth device collection. After the first Bluetooth device receives the target set identity information, the first Bluetooth device may configure its own set identity information as the target set identity information, so that the first Bluetooth device is successfully added to the target Bluetooth device collection. Each Bluetooth device in the target Bluetooth device collection is configured with the target set identity information.

In some embodiments, the user may add the first Bluetooth device to the target Bluetooth device collection by one or more of the following methods.

A first method: in response to the user needing to add the first Bluetooth device to the target Bluetooth device collection, a first trigger operation may be performed on the second electronic device, so that the first Bluetooth device is added to the target Bluetooth device collection.

Before establishing the communication connection between the first Bluetooth device and the first electronic device, the first Bluetooth device and the first electronic device may respectively establish the communication connection with the second electronic device. After the second electronic device detects the first trigger operation, the second electronic device generates a first instruction in response to the first trigger operation, and sends the first instruction to the first Bluetooth device and the first electronic device respectively, so as to trigger the first Bluetooth device to establish the communication connection with the first electronic device.

The first electronic device may receive the first instruction sent by the second electronic device and establish the communication connection with the first Bluetooth device based on the first instruction. The first instruction may be sent by the second electronic device in response to the first trigger operation. After establishing the communication connection, the first electronic device may obtain the target set identity information and send the target set identity information to the first Bluetooth device, so that the first Bluetooth device may configure its own set identity information as the target set identity information.

A specific operation method of the first trigger operation is not limited in the embodiments of the present disclosure. In some embodiments, a specific key may be disposed on the second electronic device, and the specific key may be a virtual key or a physical key. The first trigger operation may be a preset operation on the specific key (such as long pressing for a period of time, clicking on the specific key, double clicking on the specific key, etc.). In some embodiments, the first trigger operation may be any one of a touch operation, a gesture operation, or a voice operation, etc. The second electronic device may detect the trigger operation through a corresponding sensor (such as detecting a preset pressing operation through a pressure sensor, detecting a preset gesture operation through a distance sensor, detecting a preset voice content through a voice sensor, etc.), but not limited to these.

In some embodiments, the first electronic device may include a first headphone, the first Bluetooth device may include a second headphone, and the second electronic device may include the headphone box. In the case where the first headphone and the second headphone are placed inside the headphone box, the first headphone may receive the first instruction sent by the headphone box, and the first instruction may be sent by the headphone box in response to the first trigger operation. The second headphone may also receive the first instruction sent by the headphone box, and the first headphone may establish the communication connection with the second headphone. Then the first headphone sends the target set identity information to the second headphone. The first trigger operation may be performed by long pressing the pairing button on the headphone box, etc., which is not limited here. The user only needs to put the two headphones that need to be used together into the headphone box and operate the headphone box, so as to successfully pair the two headphones for use, making the operation more convenient and improving the user experience.

In some embodiments, the Bluetooth connection may be established between the first electronic device and the first Bluetooth device. The first instruction sent by the second electronic device may carry device identity information corresponding to the first electronic device and the first Bluetooth device, respectively. In some embodiments, the device identity information may include but is not limited to a Bluetooth address, and the Bluetooth address may be a classic Bluetooth address or a BLE address. After the first electronic device receives the first instruction, the first electronic device may establish the Bluetooth connection with the first Bluetooth device based on the device identity information of the first Bluetooth device carried by the first instruction. Similarly, after the first Bluetooth device receives the first instruction, the first Bluetooth device may establish the Bluetooth connection with the first electronic device based on the device identity information of the first electronic device carried by the first instruction.

The second electronic device may also only send the first instruction to one of the first electronic device and the first Bluetooth device, and the first instruction carries the device identity information of the other of the first electronic device and the first Bluetooth device. Taking the second electronic device sending the first instruction only to the first electronic device as an example, the first instruction may carry the device identity information of the first Bluetooth device, and the first electronic device may send the Bluetooth connection request to the first Bluetooth device based on the device identity information of the first Bluetooth device carried by the first instruction, so that the Bluetooth connection between the first electronic device and the first Bluetooth device may be established.

A second method: in response to the user needing to add the first Bluetooth device to the target Bluetooth device collection, a second trigger operation may be directly performed on the first electronic device, so that the first Bluetooth device is added to the Bluetooth device collection.

In some embodiments, the first electronic device may obtain the target set identity information in response to the second trigger operation, and send the target set identity information to the first Bluetooth device, thereby configuring the set identity information of the first Bluetooth device, so that the first Bluetooth device is successfully added to the target Bluetooth device collection. A specific operation method of the second trigger operation is not limited in the embodiments of the present disclosure and may be similar to the first trigger operation mentioned above, which is not repeated here.

In some embodiments, the first electronic device may include the headphone box, and the first Bluetooth device may include the second headphone. In the case where the second headphone is placed in the headphone box, in response to the headphone box detecting the second trigger operation, the headphone box obtains the target set identity information in response to the second trigger operation, and send the target set identity information to the second headphone. The second trigger operation may be performed by long pressing the pairing button on the headphone box, etc., which is not limited here. By placing the headphones that need to be added to the target Bluetooth device collection into the headphone box, the combined use of the headphones may be completed, making the operation more convenient and improving the user experience.

In some embodiments, the first electronic device includes the terminal device that establishes the Bluetooth communication connection with the first Bluetooth device. The second trigger operation may include a selection operation detected by the terminal device for the first Bluetooth device. The selection operation is configured to indicate configuring the first Bluetooth device. In some embodiments, after the terminal device establishes the Bluetooth communication connections with both the first Bluetooth device and a third Bluetooth device, the terminal device may output a configuration interface containing device information of the first Bluetooth device and device information of the third Bluetooth device. The user may select on the configuration interface, so as to add the first Bluetooth device to the target Bluetooth device collection.

The terminal device may determine which Bluetooth device is the first Bluetooth device based on the detected selection operation. By adopting this implementation method, the first electronic device may accurately determine the first Bluetooth device that needs to be added to the target Bluetooth device collection in the case where the first electronic device establishes communication connections with the plurality of Bluetooth devices, thereby improving accuracy and efficiency of configuration.

At block 220, the method may include sending the target set identity information to the first Bluetooth device, so that the first Bluetooth device configures the set identity information as the target set identity information, and the target set identity information is configured to indicate the target Bluetooth device collection.

After the first Bluetooth device configures its own set identity information as the target set identity information, the set identity information used by the first Bluetooth device is the same as the set identity information used by the second Bluetooth device in the target Bluetooth device collection. In response to other devices scanning the first Bluetooth device and the second Bluetooth device at the same time, since the set identity information of the first Bluetooth device is the same as the set identity information of the second Bluetooth device, and both the set identity information of the first Bluetooth device and the set identity information of the second Bluetooth device are the target set identity information mentioned above, the first Bluetooth device and the second Bluetooth device may be used synchronously and coordinately as the Bluetooth device collection.

In some embodiments, after the first Bluetooth device receives the target set identity information sent by the first electronic device, whether the currently configured set identity information of the first Bluetooth device is the same as the target set identity information may be determined. In response to the currently configured set identity information of the first Bluetooth device being different from the target set identity information, the set identity information of the first Bluetooth device may be configured as the target set identity information. In response to the currently configured set identity information of the first Bluetooth device being the same as the target set identity information, the first Bluetooth device may not configure its own set identity information.

In some embodiments, the target set identity information may be the set identity information currently configured by the second Bluetooth device in the target Bluetooth device collection. The second Bluetooth device may be any Bluetooth device in the target Bluetooth device collection. By configuring the set identity information of the first Bluetooth device to be the same as the set identity information currently configured by the second Bluetooth device, the first Bluetooth device is added to the target Bluetooth device collection to which the second Bluetooth device belongs. When there is only one Bluetooth device in the target Bluetooth device collection, that is, there is only the second Bluetooth device in the target Bluetooth device collection, the first Bluetooth device and the second Bluetooth device form the Bluetooth device collection.

In some embodiments, the target set identity information may be different from the set identity information currently configured by the third Bluetooth device. The third Bluetooth device is the Bluetooth device to be added to the target Bluetooth device collection. By configuring both the set identity information of the first Bluetooth device and the set identity information of the third Bluetooth device as the target set identity information, the set identity information of the first Bluetooth device may be same as the set identity information of the third Bluetooth device, thereby ensuring that both the first Bluetooth device and the third Bluetooth device are successfully added to the target Bluetooth device collection. The third Bluetooth device may be identified as not belonging to the target Bluetooth device collection before configuring the set identity information as the target set identity information. After configuring the set identity information as the target set identity information, both the third Bluetooth device and the first Bluetooth device are identified as belonging to the target Bluetooth device collection.

In some embodiments, a Bluetooth low energy audio (BLE Audio) technology, as a mainstream technology vigorously promoted in recent years, may bring people wireless audio services with lower power consumption, lower cost, higher quality, and lower latency. A coordinated set identity profile (CSIP) is provided in the BLE Audio technology, which enables the plurality of Bluetooth devices belonging to the same Bluetooth device collection to achieve coordinated synchronization during the plurality of Bluetooth devices belonging to the same Bluetooth device interacting with the external device. In the CSIP, the plurality of Bluetooth devices belonging to the same Bluetooth device collection may use the same set identity resolving key (SIRK). That is, the Bluetooth devices with the same SIRK are identified as the same Bluetooth device collection.

In related art, when one Bluetooth device in the Bluetooth device collection malfunctions or is lost, the SIRK written in the user's newly purchased Bluetooth device during production is different from the SIRK used by the Bluetooth device in the original Bluetooth device collection, which may result in the newly purchased Bluetooth device being unable to successfully be added to the original Bluetooth device collection.

In the present embodiment, the target set identity information may include a target SIRK. The first electronic device may obtain the target SIRK and send the target SIRK to the first Bluetooth device. The first Bluetooth device may configure its own SIRK as the target SIRK. Each Bluetooth device in the target Bluetooth device collection is configured with the target SIRK. Each Bluetooth device in the target Bluetooth device collection may interact with the external device according to regulations of the CSIP, so as to achieve coordinated and synchronized use. Each Bluetooth device in the target Bluetooth device collection may use the target SIRK to send a LE Audio broadcast signal.

In some embodiments, the first Bluetooth device may send the LE Audio broadcast signal based on the target SIRK after configuring its own SIRK as the target SIRK. The electronic device that receives the LE Audio broadcast signal sent by the first Bluetooth device may establish an LE Audio Bluetooth connection with the first Bluetooth device, and obtain the corresponding SIRK (i.e., target SIRK) of the first Bluetooth device.

In some embodiments, the terminal device may receive the SIRK sent by the first Bluetooth device during the process of establishing the LE Audio Bluetooth connection with the first Bluetooth device. In some embodiments, the terminal device may also directly parse the LE Audio broadcast signal sent by the first Bluetooth device, so as to obtain the corresponding SIRK of the first Bluetooth device.

The second Bluetooth device belonging to the target Bluetooth device collection may also use the target SIRK to send the LE Audio broadcast signal. The electronic device may receive the LE Audio broadcast signal sent by the second Bluetooth device, and determine whether the second Bluetooth device and the first Bluetooth device belong to the same Bluetooth device collection based on the LE Audio broadcast signal sent by the second Bluetooth device. In response to the first Bluetooth device and the second Bluetooth device belonging to the same Bluetooth device collection, audio data or the like may be synchronously output to the first Bluetooth device and the second Bluetooth device respectively, thereby achieving coordinated and synchronized use between the first Bluetooth device and the second Bluetooth device.

Each of the first Bluetooth device and the second Bluetooth device use the target SIRK to send the LE Audio broadcast signal. The target SIRK may be directly sent as a part of the LE Audio broadcast signal. In some embodiment, the target field in the LE Audio broadcast signal may be calculated and generated based on the target SIRK, and then the LE Audio broadcast signal may be generated based on the target field.

In some embodiments, the LE Audio broadcast signal sent by the second Bluetooth device may include the target field that is generated by calculation based on the target SIRK. After receiving the LE Audio broadcast signal sent by the second Bluetooth device, the electronic device may parse the LE Audio broadcast signal sent by the second Bluetooth device, to obtain target specific broadcast information and the target field carried by the LE Audio broadcast signal. A target local value may be generated by calculation based on the SIRK (i.e., target SIRK) corresponding to the first Bluetooth device and the target specific broadcast information. In response to the target local value is the same as the target field, it may be determined that the first Bluetooth device and the second Bluetooth device belong to the same Bluetooth device collection.

In some embodiments, as illustrated in FIG. 2B, the LE Audio broadcast signal may include a resolvable set identifier (RSI). The RSI may include two parts: a first part, a hash sequence 232 generated by the SIRK corresponding to the Bluetooth device; a second part, a random sequence 234 generated by random numbers. The hash sequence 232 may be calculated using a formula: hash=sih (SIKR, prand), wherein hash represents the hash sequence 232, and prand represents the random sequence 234. The target specific broadcast information that is obtained by the electronic device parsing the LE Audio broadcast signal sent by the second Bluetooth device may be the random sequence of the RSI. The target field may be the hash sequence of the RSI carried by the LE Audio broadcast signal. The electronic device may calculate based on the SIRK corresponding to the first Bluetooth device and the random sequence in the RSI obtained by parsing, using the above formula, to obtain the target local value. The target local value is compared with the hash sequence of the RSI obtained by parsing. In response to the target local value being consistent with the hash sequence of the RSI obtained by parsing, it indicates that the SIKR of the first Bluetooth device is the same as the SIRK of the second Bluetooth device (both are target SIRKs), and it may be determined that the first Bluetooth device and the second Bluetooth device belong to the same Bluetooth device collection.

In the present embodiment of the present disclosure, the set identity information of the first Bluetooth device is configured by using the target set identity information sent by the first electronic device, which may dynamically and flexibly add the first Bluetooth device to the target Bluetooth device collection for use, thereby meeting the user's usage needs.

Several methods for the first electronic device to obtain the target set identity information may be introduced below. The method for the first electronic device to obtain the target set identity information may include, but is not limited to, any one of the following obtaining methods.

A first obtaining method: generating the target set identity information according to a preset method.

Generating the target set identity information by the first electronic device according to the preset method, may include: generating the target set identity information based on the target BLE address, wherein the target BLE address includes any one of the BLE address of the first electronic device, the BLE address of the first Bluetooth device, and the BLE address of the third Bluetooth device; the third Bluetooth device is the Bluetooth device to be added to the target Bluetooth device collection; or, randomly generating the set identity information as the target set identity information.

The first electronic device may obtain the target BLE address and generate the target set identity information through a specific method based on the target BLE address. In some embodiments, in the specific method, the target BLE address may be directly set or used as a partial field of the target set identity information, so as to generate the target set identity information. In some embodiments, the target BLE address may be used as the partial field of the target set identity information, and the partial field may be combined with a first preset field, so as to generate the target set identity information. The first preset field may refer to field information prespecified in the set identity information, or the first preset field may refer to randomly generated field information. In some embodiments, the target set identity information may include the target SIRK, and the SIRK may be 128 bytes. The BLE address (48 bytes) may be directly used as the partial field of the target SIRK. In some embodiments, SIRK = BLE address ∥ the first preset field.

In some embodiments, in the specific method, the target BLE address may be hashed and the calculation result may be used or set as the partial field of the target set identity information, so as to generate the target set identity information. In some embodiments, the calculation result may be combined with a second preset field, to generate the target set identity information. In some embodiments, SIRK = HASH ∥ second preset field, wherein HASH represents the calculation result of hashing the target BLE address. The first preset field and the second preset field may be the same or different, which may be set according to the actual situation. Due to the uniqueness of the BLE addresses, it may be ensured that the generated target set identity information is also unique and may not be confused with the set identity information of other Bluetooth device collections, thereby improving the accuracy of using the Bluetooth device collection.

In some embodiments, the first electronic device is the Bluetooth device, the target Bluetooth device collection is the Bluetooth device collection to which the first electronic device is to be added. That is, the first electronic device is the Bluetooth device that the user expects to pair with the first Bluetooth device for synchronous and coordinated use. After the first Bluetooth device configures the set identity information as the target set identity information, the first Bluetooth device and the first electronic device belong to the target Bluetooth device collection, so that the first Bluetooth device may pair with the first electronic device for synchronized and coordinated use. The first electronic device may use or set its own BLE address as the target BLE address, use or set the BLE address of the first Bluetooth device as the target BLE address, or obtain the BLE address from the third Bluetooth device as the target BLE address.

FIG. 3A is a time sequence schematic view of the Bluetooth device configuration method in some embodiments of the present disclosure. As illustrated in FIG. 3A, when the first electronic device is the Bluetooth device (referred to as the fourth Bluetooth device in the present embodiment), the communication connection may be established between the fourth Bluetooth device and the first Bluetooth device. The fourth Bluetooth device may generate the target set identity information based on its own BLE address, and send the target set identity information to the first Bluetooth device. The first Bluetooth device may determine whether its own set identity information is the same as the target set identity information. In response to the set identity information of the first Bluetooth device being different from the target set identity information, the first Bluetooth device may configure its own set identity information as the target set identity information. In some embodiments, the fourth Bluetooth device may also determine whether its own set identity information is the same as the target set identity information. In response to the set identity information of the fourth Bluetooth device being different from the target set identity information, the fourth Bluetooth device may also configure its own set identity information as the target set identity information. In response to the set identity information of the fourth Bluetooth device being the same as the set identity information of the first Bluetooth device, the fourth Bluetooth device and the first Bluetooth device may be identified as belonging to the same Bluetooth device collection.

In some embodiments, in response to the first electronic device being not the Bluetooth device that the user expects to pair with the first Bluetooth device for synchronized use, the first electronic device may use or set the BLE address of the first Bluetooth device as the target BLE address, or obtain the BLE address from the third Bluetooth device as the target BLE address.

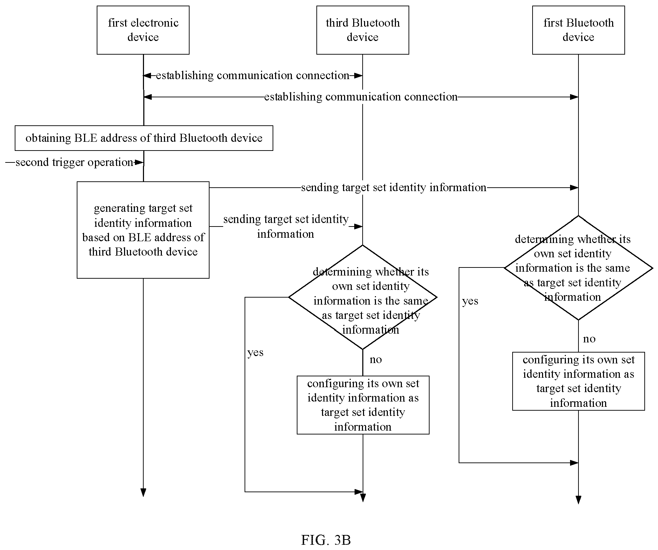

FIG. 3B is a time sequence schematic view of the Bluetooth device configuration method in some embodiments of the present disclosure. As illustrated in FIG. 3B, the first electronic device may establish the communication connections with both the first Bluetooth device and the third Bluetooth device. The first electronic device may obtain the BLE address of the third Bluetooth device. In response to detecting the second trigger operation, the first electronic device may generate the target set identity information based on the BLE address of the third Bluetooth device, and send the target set identity information to the first Bluetooth device and the third Bluetooth device respectively. After receiving the target set identity information sent by the first electronic device, the first Bluetooth device may determine whether its own set identity information is the same as the target set identity information. In response to the set identity information of the first Bluetooth device being different from the target set identity information, the first Bluetooth device may configure its own set identity information as the target set identity information. After receiving the target set identity information sent by the first electronic device, the third Bluetooth device may also configure its own set identity information as the target set identity information. The third Bluetooth device may determine whether its own set identity information is the same as the target set identity information. In response to the set identity information of the third Bluetooth device being different from the target set identity information, the third Bluetooth device may configure its own set identity information as the target set identity information. After both the first Bluetooth device and the third Bluetooth device have completed the configuration of the set identity information, in response to the set identity information of the first Bluetooth device being the same as the set identity information of the third Bluetooth device, the first Bluetooth device and the third Bluetooth device may be recognized as belonging to the same Bluetooth device collection.

In the present embodiment, the first electronic device may generate the target set identity information according to the preset method, ensuring that the generated target set identity information is unique and avoiding confusion with other Bluetooth device collections, thereby ensuring that the first Bluetooth device is successfully added to the target Bluetooth device collection to be added and meeting the user's usage needs.

In some embodiments, the first electronic device may also randomly generate the set identity information as the target set identity information. The first electronic device may store various fields of the target set identity information in advance and randomly generate the field values in each field, to obtain the unique target set identity information, thereby improving the accuracy of using the Bluetooth device collection. The first electronic device may also generate the target set identity information through other methods, but not limited to the above-mentioned methods.

A second obtaining method: obtaining the set identity information stored in the first electronic device as the target set identity information.

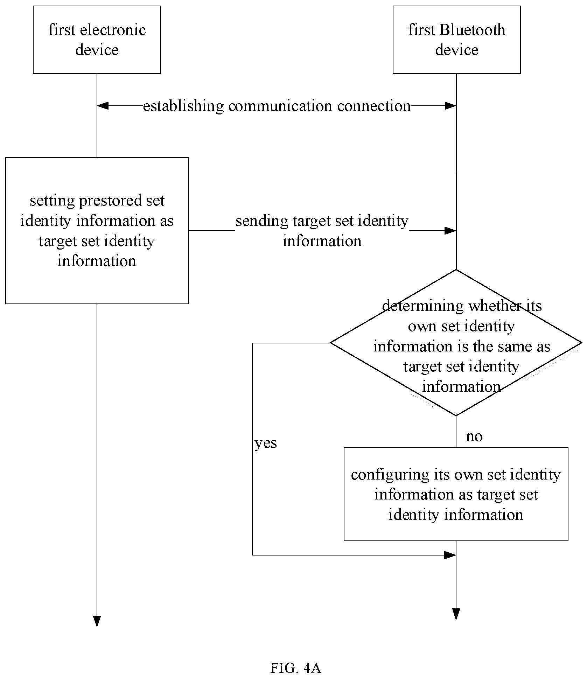

FIG. 4A is a time sequence schematic view of the Bluetooth device configuration method in some embodiments of the present disclosure. As illustrated in FIG. 4A, the first electronic device may establish the communication connection with the first Bluetooth device. The first electronic device may obtain prestored set identity information and send the prestored set identity information as the target set identity information to the first Bluetooth device. After receiving the target set identity information sent by the first electronic device, the first Bluetooth device may determine whether its own set identity information is the same as the target set identity information. In response to the set identity information of the first Bluetooth device being different from the target set identity information, the first Bluetooth device may configure its own set identity information as the target set identity information. In some embodiments, in the case where the target Bluetooth device collection may be the Bluetooth device collection to which the first electronic device is to be added, the prestored set identity information in the first electronic device may be the same or different from the currently configured set identity information. The first electronic device may determine whether the current configured set identity information is the same as the target set identity information. In response to the current configured set identity information of the first electronic device being different from the target set identity information, the first electronic device may configure its own set identity information as the target set identity information. Thus, the first electronic device may be successfully added to the target Bluetooth device collection, so that the first electronic device may be used synchronously and coordinately with the first Bluetooth device collection.

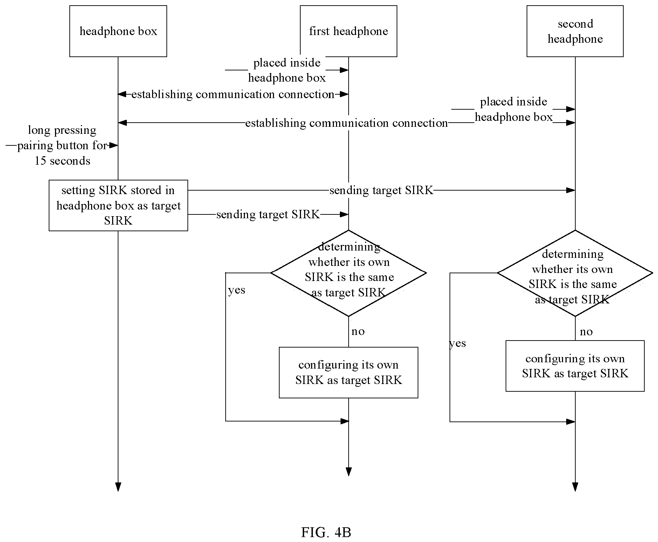

In some embodiments, the target set identity information may include the target SIRK. Taking the first electronic device being the headphone box and the first Bluetooth device being the second headphone as an example. The user expects to pair the second headphone with the first headphone for synchronized use. That is, the user expects to make the second headphone and the first headphone belong to the same Bluetooth device collection. As illustrated in FIG. 4B, FIG. 4B is a time sequence schematic view of the Bluetooth device configuration method in some embodiments of the present disclosure. The user may place the first headphone and the second headphone separately into the headphone box. The headphone box establishes the communication connection with the first headphone and the second headphone placed in the headphone box respectively. In response to the headphone box detecting the operation of long pressing the pairing button for 15 seconds, the SIRK stored in the headphone box may be sent as the target SIRK to the first headphone and the second headphone respectively. After receiving the target SIRK sent by the headphone box, the first headphone may determine whether its own SIRK is the same as the target SIRK. In response to the SIRK of the first headphone being different from the target SIRK, the first headphone may configure its own SIRK as the target SIRK. After receiving the target SIRK sent by the headphone box, the second headphone may determine whether its own SIRK is the same as the target SIRK. In response to the SIRK of the second headphone being different from the target SIRK, the second headphone may configure its own SIRK as the target SIRK. In response to the target SIRK being the same as the SIRK of the headphone, for example, in response to the SIRK stored in the headphone box being SIRK1 and the current configured SIRK of the second headphone being also SIRK1, the second headphone does not need to reconfigure its own SIRK.

In the present embodiment, the first electronic device may send the prestored set identity information as the target set identity information to the first Bluetooth device, so that the first Bluetooth device may be successfully added to the target Bluetooth device collection to be added and meet the user's usage needs.

A third obtaining method: obtaining the set identity information currently configured by the second Bluetooth device as the target set identity information. The second Bluetooth device is any Bluetooth device in the target Bluetooth device collection.

In some embodiments, the first electronic device may establish the communication connections with the first Bluetooth device and the second Bluetooth device respectively, and obtain the set identity information currently configured by the second Bluetooth device from the second Bluetooth device. The first electronic device may send the set identity information currently configured by the second Bluetooth device as the target set identity information to the first Bluetooth device.

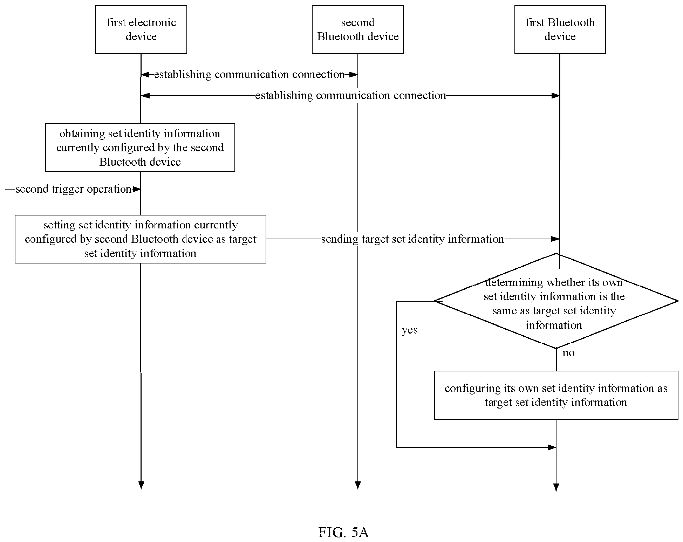

FIG. 5A is a time sequence schematic view of the Bluetooth device configuration method in some embodiments of the present disclosure. As illustrated in FIG. 5A, the first electronic device may establish the communication connection with the first Bluetooth device and the second Bluetooth device respectively. The first electronic device may obtain the set identity information currently configured by the second Bluetooth device. During detecting the second trigger operation, in response to the second trigger operation, the first electronic device may send the set identity information currently configured by the second Bluetooth device as the target set identity information to the first Bluetooth device. After receiving the target set identity information sent by the first electronic device, the first Bluetooth device may determine whether its own set identity information is the same as the target set identity information. In response to the set identity information of the first Bluetooth device being different from the target set identity information, the first Bluetooth device may configure its own set identity information as the target set identity information. After the first Bluetooth device completes the configuration of the set identity information, the set identity information of the first Bluetooth device is the same as the set identity information of the second Bluetooth device. The first Bluetooth device is successfully added to the target Bluetooth device collection, and the first Bluetooth device and the second Bluetooth device may be recognized as belonging to the same Bluetooth device collection, thereby achieving synchronous and coordinated use. In some embodiments, in the case where the target Bluetooth device collection is the Bluetooth device collection to which the first electronic device is to be added, the first electronic device may also configure its own set identity information as the target set identity information (i.e., the set identity information currently configured by the second Bluetooth device), so that the first electronic device may be added to the target Bluetooth device collection.

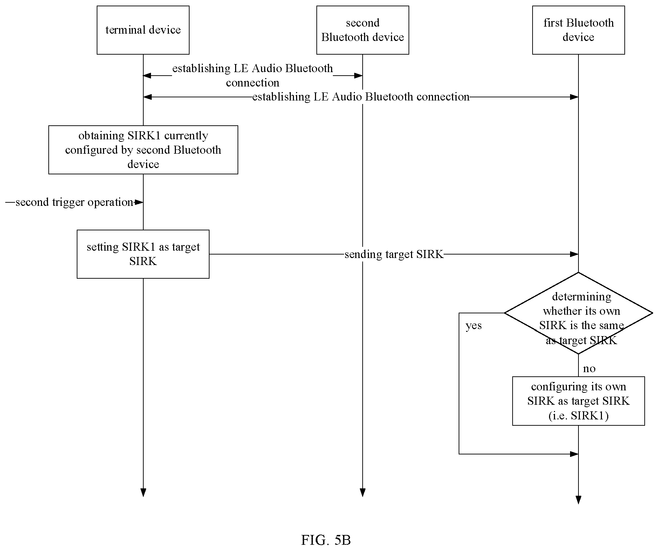

In some embodiments, the target set identity information may include the target SIRK. Taking the first electronic device being the terminal device that establishes the Bluetooth communication connection with the first Bluetooth device as an example, as illustrated in FIG. 5B, FIG. 5B is a time sequence schematic view of the Bluetooth device configuration method in some embodiments of the present disclosure. The terminal device may establish the LE Audio Bluetooth connection with the first Bluetooth device and the second Bluetooth device respectively, and obtain the SIRK1 currently configured by the second Bluetooth device. In some embodiments, the LE Audio Bluetooth connection is established on the basis of the BLE connection. The process of establishing the LE Audio Bluetooth connection may include querying some device parameters on the basis of the BLE connection, and querying some device parameters may include querying the SIRK of the Bluetooth device. After establishing the LE Audio Bluetooth connection, in response to there being a business demand, connected isochronous streams (CIS) channels may be established for business transmission. The terminal device may receive the SIRK1 sent by the second Bluetooth device during establishing the LE Audio Bluetooth connection between the terminal device and the second Bluetooth device.

In some embodiments, the terminal device may also directly parse the LE Audio broadcast signal sent by the second Bluetooth device, to obtain the SIRK1 currently used by the second Bluetooth device. In some embodiments, the LE Audio broadcast signal sent by the second Bluetooth device may directly include the SIRK1 currently used by the second Bluetooth device, and the terminal device may directly obtain the SIRK1 by parsing the LE Audio broadcast signal sent by the second Bluetooth device. In some embodiments, the LE Audio broadcast signal sent by the second Bluetooth device may include the target field generated based on the currently used SIRK1. The terminal device may parse the LE Audio broadcast signal sent by the second Bluetooth device to obtain the target field and determine the SIRK1 based on the target field. In some embodiments, the LE Audio broadcast signal may include the RSI, and the RSI may include two parts: a first part, a hash sequence generated by SIRK1; a second part, the random sequence generated by random numbers. The target field may be the hash sequence of the RSI carried in the LE Audio broadcast signal. The terminal device may parse the LE Audio broadcast signal sent by the second Bluetooth device to obtain the hash sequence and the random sequence of the RSI carried in the LE Audio broadcast signal, and calculate the SIRK1 based on the random sequence of the RSI.

During the terminal device detecting the second trigger operation (for example, the user selects to add the first Bluetooth device to the Bluetooth device collection where the second Bluetooth device is located by clicking on the combination add control for the first Bluetooth device on the Bluetooth interface, etc.), in response to the second trigger operation, the terminal device send the SIRK1 currently used by the second Bluetooth device as the target SIRK to the first Bluetooth device. After receiving the target SIRK, the first Bluetooth device may determine whether its own SIRK is the same as the target SIRK. In response to the SIRK of the first Bluetooth device being different from the target SIRK, the first Bluetooth device may configure its own SIRK as the target SIRK (i.e., SIRK1). The SIRK of the first Bluetooth device and the SIRK of the second Bluetooth device are both SIRK1, so that the first Bluetooth device and the second Bluetooth device may be recognized as belonging to the same Bluetooth device collection.

In the present embodiment, the first electronic device may establish the communication connection with the second Bluetooth device, and send the set identity information currently configured by the second Bluetooth device as the target set identity information to the first Bluetooth device. Thus, the first Bluetooth device may configure its own set identity information as the target set identity information, and ensure that its own set identity information is the same as the set identity information of the second Bluetooth device, thereby enabling the first Bluetooth device to be successfully added to the target Bluetooth device collection, meeting the user's usage needs.

A fourth obtaining method: in the case where the target Bluetooth device collection is the Bluetooth device collection to which the first electronic device has already added, obtaining the set identity information currently configured by the first electronic device as the target set identity information.

The first electronic device may be the Bluetooth device in the target Bluetooth device collection. The first electronic device may send the currently configured set identity information as the target set identity information to the first Bluetooth device. The first Bluetooth device may configure its own set identity information as the target set identity information, so that the first Bluetooth device is successfully added to the target Bluetooth device collection.

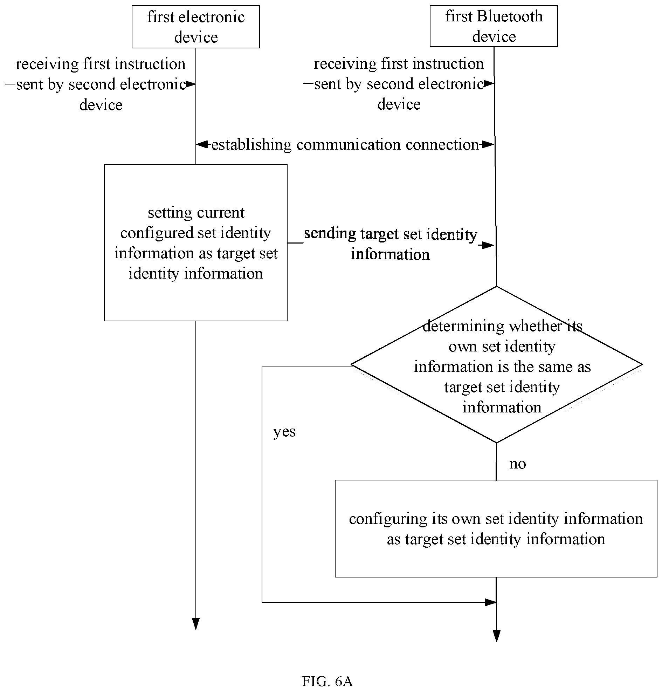

FIG. 6A is a time sequence schematic view of the Bluetooth device configuration method in some embodiments of the present disclosure. As illustrated in FIG. 6A, the first electronic device and the first Bluetooth device may respectively receive the first instruction sent by the second electronic device. Based on the first instruction, the first electronic device may be triggered to establish the communication connection with the first Bluetooth device. The first electronic device may send the currently configured set identity information as the target set identity information to the first Bluetooth device. After receiving the target set identity information sent by the first electronic device, the first Bluetooth device may determine whether its own set identity information is the same as the target set identity information. In response to the set identity information of the first Bluetooth device being different from the target set identity information, the first Bluetooth device may configure its own set identity information as the target set identity information. After the first Bluetooth device completes the configuration of the set identity information, in response to the set identity information of the first Bluetooth device being the same as the set identity information of the first electronic device, the first Bluetooth device and the first electronic device may be recognized as belonging to the same Bluetooth device collection.

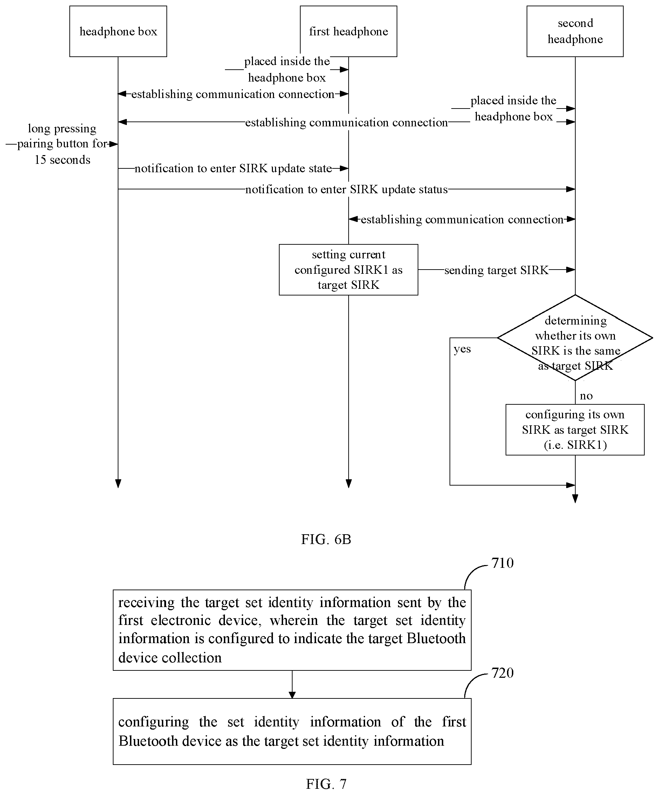

In some embodiments, the target set identity information may include the target SIRK. Taking the first electronic device being the first headphone, the first Bluetooth device being the second headphone, and the second electronic device being the headphone box as an example, the first headphone belongs to the target Bluetooth device collection. As illustrated in FIG. 6B, FIG. 6B is a time sequence schematic view of the Bluetooth device configuration method in some embodiments of the present disclosure. The user may place the first headphone and the second headphone separately into the headphone box. The headphone box establishes the communication connection with the first headphone and the second headphone placed in the headphone box respectively. In response to the headphone box detecting the first trigger operation (such as long pressing the pairing button for 15 seconds), the first instruction may be generated and sent to the first headphone to notify the first headphone to enter a SIRK update state. In some embodiments, the headphone box may also send the first instruction to the second headphone to notify the second headphone to enter the SIRK update state. The first headphone receives the first instruction sent by the headphone box, and establishes the communication connection with the first headphone based on the first instruction. The communication connection may include, but is not limited to, the classic Bluetooth connection, or the BLE Bluetooth connection, etc. The first headphone may send the currently configured SIRK (i.e., SIRK1) as the target SIRK to the second headphone according to the first instruction. After receiving the target SIRK sent by the first headphone, the second headphone may determine whether its own SIRK is the same as the target SIRK. In response to the SIRK of the second headphone being different from the target SIRK, the second headphone may configure its own SIRK as the target SIRK (i.e., SIRK1).

In the present embodiment, in the case where the target Bluetooth device collection is the Bluetooth device collection to which the first electronic device has already added, the first electronic device may send the currently configured set identity information as the target set identity information to the first Bluetooth device. Thus, the configured set identity information of the first Bluetooth device is consistent with the set identity information of the first electronic device, ensuring that the first Bluetooth device is successfully added to the target Bluetooth device collection and meeting the user's usage needs.

The set identity information involved in the above embodiments, in addition to the SIRK, may further include other set identity information. In some embodiments, the Bluetooth devices in the same Bluetooth device collection use the same Bluetooth address to communicate with the external device, the set identity information may include the Bluetooth address, etc., but is not limited to this.

As illustrated in FIG. 7, in some embodiments, a Bluetooth device configuration method is provided, which may be performed by the first Bluetooth device mentioned above. The Bluetooth device configuration method may include the following operations.

At block 710, the method may include receiving the target set identity information sent by the first electronic device, wherein the target set identity information is configured to indicate the target Bluetooth device collection.

In some embodiments, before the operation 710, the Bluetooth device configuration method further includes: receiving the first instruction sent by the second electronic device, wherein the first instruction is generated by the second electronic device in response to the first trigger operation; the communication connection between the first Bluetooth device and the first electronic device is established based on the first instruction.

In some embodiments, the first electronic device includes the first headphone, the first Bluetooth device includes the second headphone, and the second electronic device includes the headphone box. The operation of receiving the first instruction sent by the second electronic device includes: receiving the first instruction sent by the headphone box in the case where the first headphone and the second headphone are placed in the headphone box, wherein the first instruction is sent by the headphone box in response to the first trigger operation.

In some embodiments, the first Bluetooth device includes the second headphone, and the first electronic device includes the headphone box; or, the first electronic device includes the terminal device that establishes the Bluetooth communication connection with the first Bluetooth device.

In some embodiments, the target set identity information includes the target SIRK.

At block 720, the method may include configuring the set identity information of the first Bluetooth device as the target set identity information.

In some embodiments, the operation 720 may include: determining whether the set identity information currently configured by the first Bluetooth device is the same as the target set identity information; in response to the set identity information currently configured by the first Bluetooth device being different from the target set identity information, configuring the set identity information of the first Bluetooth device as the target set identity information.

In some embodiments, the target set identity information is generated by the first electronic device according to the preset method. Alternatively, the target set identity information is the set identity information stored in the first electronic device. Alternatively, the target set identity information is the set identity information that is currently configured by the second Bluetooth device and obtained by the first electronic device, and the second Bluetooth device is any Bluetooth device in the target Bluetooth device collection.

In some embodiments, in the case where the target set identity information is generated by the first electronic device according to the preset method, the target set identity information is generated by the first electronic device based on the target BLE address. The target BLE address includes any one of the BLE address of the first electronic device, the BLE address of the first Bluetooth device, and the BLE address of the third Bluetooth device. The third Bluetooth device is the Bluetooth device to be added to the target Bluetooth device collection. Alternatively, the target set identity information is randomly generated by the first electronic device.

In some embodiments, in the case where the target Bluetooth device collection is the Bluetooth device collection to which the first electronic device is to be added, the first electronic device is further configured to configure the set identity information of the first electronic device as the target set identity information.

In some embodiments, in the case where the target Bluetooth device collection is the Bluetooth device collection to which the first electronic device has already added, the target set identity information is the set identity information currently configured by the first electronic device.

The description of the Bluetooth device configuration method performed by the first Bluetooth device provided in the embodiments of the present disclosure may refer to the relevant descriptions of the Bluetooth device configuration method performed by the first electronic device provided in the above embodiments, which may not be repeated here.

In the present embodiment, the set identity information of the first Bluetooth device is configured by using the target set identity information sent by the first electronic device, which may dynamically and flexibly add the first Bluetooth device to the target Bluetooth device collection to be added for use, meeting the user's usage needs.

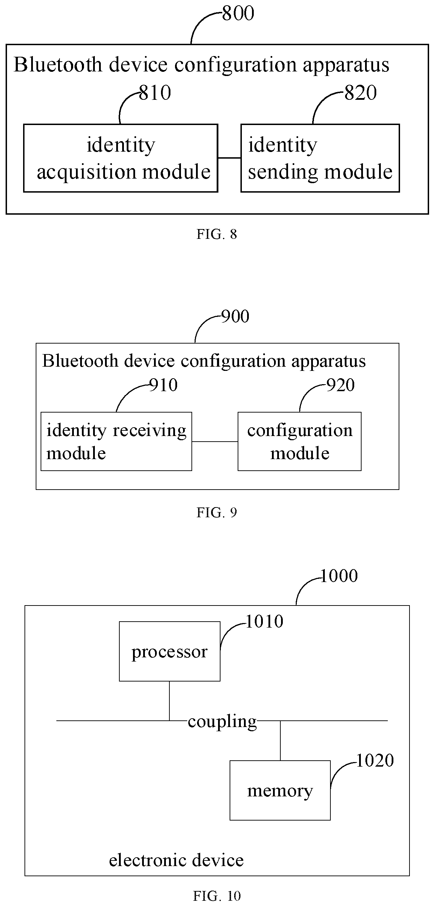

As illustrated in FIG. 8, in some embodiments, a Bluetooth device configuration apparatus 800 is provided, which may be performed by the first electronic device mentioned above. The Bluetooth device configuration apparatus 800 may include an identity acquisition module 810 and an identity sending module 820.

The identity acquisition module 810 is configured to obtain the target set identity information.

The identity sending module 820 is configured to send the target set identity information to the first Bluetooth device, so that the first Bluetooth device may configure the set identity information as the target set identity information. The target set identity information is configured to indicate the target Bluetooth device collection.

In some embodiments, the identity acquisition module 810 is further configured to generate the target set identity information according to the preset method; or, obtain the set identity information stored in the first electronic device as the target set identity information; or, obtain the set identity information currently configured by the second Bluetooth device as the target set identity information. The second Bluetooth device is any Bluetooth device in the target Bluetooth device collection.

In some embodiments, the identity acquisition module 810 is further configured to generate the target set identity information based on the target BLE address. The target BLE address includes any one of the BLE address of the first electronic device, the BLE address of the first Bluetooth device, and the BLE address of the third Bluetooth device. The third Bluetooth device is the Bluetooth device to be added to the target Bluetooth device collection. Alternatively, the identity acquisition module 810 is further configured to randomly generate the set identity information as the target set identity information.

In some embodiments, the identity acquisition module 810 is further configured to obtain the target BLE address; and use or set the target BLE address as the partial field of the target set identity information, to generate the target set identity information. Alternatively, the identity acquisition module 810 is further configured to perform hash calculation on the target BLE address and use the calculation result as the partial field of the target set identity information, to generate the target set identity information.

In some embodiments, the Bluetooth device configuration device 800 further includes a configuration module. The configuration module is configured to configure the set identity information of the first electronic device as the target set identity information in the case where the target Bluetooth device collection is the Bluetooth device collection to which the first electronic device is to be added, so that the first electronic device is added to the target Bluetooth device collection.

In some embodiments, the identity acquisition module 810 is further configured to obtain the set identity information currently configured by the first electronic device as the target set identity information in the case where the target Bluetooth device collection is the Bluetooth device collection to which the first electronic device has already added.

In some embodiments, the Bluetooth device configuration apparatus 800 further includes a connection module. The connection module is configured to receive the first instruction sent by the second electronic device. The first instruction is sent by the second electronic device in response to the first trigger operation. The communication connection between the first electronic device and the first Bluetooth device is established based on the first instruction.

In some embodiments, the first electronic device includes the first headphone, the first Bluetooth device includes the second headphone, and the second electronic device includes the headphone box. The connection module is further configured to receive the first instruction sent by the headphone box in the case where the first headphone and the second headphone are placed inside the headphone box. The first instruction is sent by the headphone box in response to the first trigger operation.

In some embodiments, the identity acquisition module 810 is further configured to obtain the target set identity information in response to the second trigger operation.

In some embodiments, the first electronic device includes the headphone box, and the first Bluetooth device includes the second headphone. The identity acquisition module 810 is further configured to obtain the target set identity information in response to the second trigger operation in the case where the second headphone is placed in the headphone box.

In some embodiments, the first electronic device includes the terminal device that establishes the Bluetooth communication connection with the first Bluetooth device. The Bluetooth communication connection includes any one of the classic Bluetooth connection, the Bluetooth low-power BLE connection, and the LE Audio Bluetooth connection. The second trigger operation includes the selection operation detected by the terminal device for the first Bluetooth device, and the selection operation is configured to indicate the configuration of the first Bluetooth device.

In some embodiments, the target set identity information includes the target SIRK.

In the present embodiment, the set identity information of the first Bluetooth device is configured by using the target set identity information sent by the first electronic device, which may dynamically and flexibly add the first Bluetooth device to the target Bluetooth device collection to be added for use, meeting the user's usage needs.

As illustrated in FIG. 9, in some embodiments, the Bluetooth device configuration apparatus 900 is provided, which may be performed by the first Bluetooth device mentioned above. The Bluetooth device configuration apparatus 900 may include an identity receiving module 910 and a configuration module 920.

The identity receiving module 910 is configured to receive the target set identity information sent by the first electronic device, the target set identity information is configured to indicate the target Bluetooth device collection.

The configuration module 920 is configured to configure the set identity information of the first Bluetooth device as the target set identity information.

In some embodiments, the Bluetooth device configuration apparatus 900 further includes the connection module. The connection module is configured to receive the first instruction sent by the second electronic device, the first instruction is generated by the second electronic device in response to the first trigger operation. The communication connection between the first Bluetooth device and the first electronic device is established based on the first instruction.

In some embodiments, the first electronic device includes the first headphone, the first Bluetooth device includes the second headphone, and the second electronic device includes the headphone box. The connection module is further configured to receive the first instruction sent by the headphone box in the case where the first headphone and the second headphone are placed inside the headphone box. The first instruction is sent by the headphone box in response to the first trigger operation.

In some embodiments, the first Bluetooth device includes the second headphone, and the first electronic device includes the headphone box. Alternatively, the first electronic device includes the terminal device that establishes the Bluetooth communication connection with the first Bluetooth device.

In some embodiments, the target set identity information includes the target SIRK.

In some embodiments, the configuration module 920 is further configured to determine whether the set identity information currently configured by the first Bluetooth device is the same as the target set identity information. In response to the set identity information currently configured by the first Bluetooth device being different from the target set identity information, the set identity information of the first Bluetooth device is configured as the target set identity information.

In some embodiments, the target set identity information is generated by the first electronic device according to the preset method. Alternatively, the target set identity information is the set identity information stored in the first electronic device. Alternatively, the target set identity information is the set identity information that is currently configured by the second Bluetooth device and obtained by the first electronic device. The second Bluetooth device is any Bluetooth device in the target Bluetooth device collection.

In some embodiments, in the case where the target set identity information is generated by the first electronic device according to the preset method, the target set identity information is generated by the first electronic device based on the target BLE address. The target BLE address includes any one of the BLE address of the first electronic device, the BLE address of the first Bluetooth device, and the BLE address of the third Bluetooth device. The third Bluetooth device is the Bluetooth device to be added to the target Bluetooth device collection. Alternatively, the target set identity information is randomly generated by the first electronic device.

In some embodiments, in the case where the target Bluetooth device collection is the Bluetooth device collection to which the first electronic device is to be added, the first electronic device is further configured to configure the set identity information of the first electronic device as the target set identity information.

In some embodiments, in the case where the target Bluetooth device collection is the Bluetooth device collection that the first electronic device has already added, the target set identity information is the set identity information currently configured by the first electronic device.

In the present embodiment, the set identity information of the first Bluetooth device is configured by using the target set identity information sent by the first electronic device, which may dynamically and flexibly add the first Bluetooth device to the target Bluetooth device collection to be added for use, meeting the user's usage needs.

FIG. 10 is a structural block view of an electronic device in some embodiments of the present disclosure. As illustrated in FIG. 10, an electronic device 1000 may include one or more of the following components: a processor 1010, a memory 1020 coupled to the processor 1010. The memory 1020 may store one or more computer programs. The one or more computer programs may be configured to implement the Bluetooth device configuration method performed by the first electronic device as described in the above embodiments during the one or more processors 1010 being executed.

The processor 1010 may include one or more processing cores. The processor 1010 utilizes various interfaces and circuits to connect various parts of the electronic device 1000. The processor 1010 executes various functions and processes data of the electronic device 1000 by running or executing instructions, programs, code sets, or instruction sets stored in the memory 1020, as well as calling data stored in the memory 1020. In some embodiments, the processor 1010 may be implemented in at least one hardware form from a digital signal processing (DSP), a field programmable gate array (FPGA), or a programmable logic array (PLA). The processor 1010 may integrate one or a combination of a central processing unit (CPU), a graphics processing unit (GPU), and a modem. The CPU mainly processes an operating system, a user interface, and an application program. The GPU is configured for rendering and drawing display content. The modem is configured to handle wireless communication. The above-mentioned modem may not be integrated into the processor 1010 and may be implemented separately through a communication chip.

The memory 1020 may include a random access memory (RAM) or a read only memory (ROM). The memory 1020 may be configured to store instructions, programs, code, code sets, or instruction sets. The memory 1020 may include a storage program area and a storage data area. The storage program area may store the instructions for implementing the operating system, the instructions for implementing at least one function (such as a touch function, a sound playback function, an image playback function, etc.), the instructions for implementing the various method embodiments described above, etc. The storage data area may further store data created by the electronic device 1000 during use.

The electronic device 1000 may further include a Bluetooth module, and the Bluetooth module may be configured to provide a Bluetooth communication function, establish the Bluetooth connection with the second electronic device, and perform the Bluetooth data transmission. The Bluetooth module may support one or more Bluetooth protocols, such as the classic Bluetooth, the BLE, the BLE Audio, etc., but is not limited to these. The Bluetooth module may change with the development of Bluetooth protocols.

In some embodiments, the present disclosure provides a Bluetooth device including the memory and the processor. The memory stores the computer program. In response to the computer program being executed by the processor, the processor implements the Bluetooth device configuration method performed by the first Bluetooth device as described in any one of the above embodiments.

In some embodiments, the present disclosure provides a computer-readable storage medium storing the computer program. In response to the computer program being executed by the processor, the Bluetooth device configuration method performed by the first Bluetooth device as described in any one of the above embodiments is implemented.

In some embodiments, the present disclosure provides a computer-readable storage medium storing the computer program. In response to the computer program being executed by the processor, the Bluetooth device configuration method performed by the first electronic device as described in any one of the above embodiments is implemented.

In some embodiments, the present disclosure provides a computer program product. The computer program product includes a non-instantaneous computer-readable storage medium storing the computer program. In response to the computer program being executed by the processor, the Bluetooth device configuration method performed by the first Bluetooth device as described in any one of the above embodiments is implemented.

In some embodiments, the present disclosure provides a computer program product. The computer program product includes the non-instantaneous computer-readable storage medium storing the computer program. In response to the computer program being executed by the processor, the Bluetooth device configuration method performed by the first electronic device as described in any one of the above embodiments is implemented.

Those of ordinary skill in the art may understand that all or part of the process in any one of the above embodiments may be implemented by instructing relevant hardware through the computer program. The program may be stored in the non-volatile computer-readable storage medium. In response to the program being executed, the process of the methods in any one of above embodiments may be implemented. The storage medium may be a magnetic disk, an optical disk, or the ROM, etc.

Any reference to the memory, the storage, the database, or other media used herein may include non-volatile memory and/or volatile memory. Suitable non-volatile memory may include the ROM, a programmable ROM (PROM), an erasable PROM (EPROM), an electrically erasable PROM (EEPROM), or a flash memory. The volatile memory may include a random access memory (RAM), which is used as an external cache memory. By way of illustration and not limitation, the RAM may include various forms, such as a static RAM (SRAM), a dynamic random access memory (DRAM), a synchronous DRAM (SDRAM), a double data rate SDRAM (DDR SDRAM), an enhanced synchronous DRAM (ESDRAM), a synchlink DRAM (SLDRAM), a rambus DRAM (RDRAM), or a direct rambus DRAM (DRDRAM), etc.

The term "present embodiment" or "some embodiments" mentioned throughout the specification means that specific features, structures, or characteristics related to the embodiment are included in at least one embodiment of the present disclosure. Thus, the phrases "in the present embodiment " or "in some embodiments" that appear throughout the entire specification may not necessarily refer to the same embodiment. In addition, the specific features, the structures, or the characteristics may be combined in any suitable manner in one or more embodiments. Those of ordinary skill in the art should know that the embodiments described in the specification are optional embodiments, and the actions and modules involved are not necessarily necessary for the present disclosure. The term "plurality of" or "multiple" in the present disclosure refers to "two or more".

In various embodiments of the present disclosure, the size of the sequence numbers of the above processes does not necessarily mean the necessary order of execution. The execution order of each process should be determined by its function and internal logic, and should not constitute any limitation on the implementation process of the embodiments of the present disclosure.

The units described above as separate components may or may not be physically separated. The components displayed as units may or may not be physical units. That is, the components may be located in one place or distributed across a plurality of network units. Some or all of the units may be selected according to actual needs to achieve the purpose of the embodiments of the present disclosure.

In addition, the functional units in some embodiments of the present disclosure may be integrated into one processing unit, or each unit may be physically independent, or two or more units may be integrated into one unit. The integrated unit may be implemented in a form of hardware, or may be implemented in a form of a software functional unit.

The Bluetooth device configuration method, the Bluetooth device configuration apparatus, the electronic device, and the storage medium provided by the embodiments of the present disclosure are described in detail. The principles and the implementation methods of the present disclosure are described and explained by some embodiments provided in the present disclosure. The above descriptions of the embodiments are only used to help understand the methods and core ideas of the present disclosure. Furthermore, according to the ideas of the present disclosure, those of ordinary skill in the art may change the specific implementation method and the application scope. In summary, the contents of the present specification should not be understood as limiting the present disclosure.

## Claims

1. A Bluetooth device configuration method, **characterized in that** the method is performed by a first electronic device, and the method comprises:
obtaining target set identity information; and
sending the target set identity information to a first Bluetooth device, so that the first Bluetooth device configures set identity information as the target set identity information, and the target set identity information is configured to indicate a target Bluetooth device collection.

2. The method according to claim 1, wherein the obtaining target set identity information, comprises:
generating the target set identity information according to a preset method; or
obtaining set identity information stored in the first electronic device as the target set identity information; or
obtaining set identity information currently configured by a second Bluetooth device as the target set identity information, wherein the second Bluetooth device is any Bluetooth device in the target Bluetooth device collection.

3. The method according to claim 2, wherein the generating the target set identity information according to a preset method, comprises:
generating the target set identity information based on a target Bluetooth low energy (BLE) address, wherein the target BLE address comprises any one of a BLE address of the first electronic device, a BLE address of the first Bluetooth device, and a BLE address of a third Bluetooth device; and the third Bluetooth device is a Bluetooth device to be added to the target Bluetooth device collection; or
randomly generating set identity information as the target set identity information.

4. The method according to claim 3, wherein the generating the target set identity information based on a target BLE address, comprises:
obtaining the target BLE address;
setting the target BLE address as a partial field of the target set identity information, to generate the target set identity information; or
performing a hash calculation on the target BLE address, and setting a calculation result as the partial field of the target set identity information, to generate the target set identity information.

5. The method according to any one of claims 1 to 4, wherein in the case where the target Bluetooth device collection is a Bluetooth device collection to which the first electronic device is to be added, the method further comprises:
configuring set identity information of the first electronic device as the target set identity information, so that the first electronic device is added to the target Bluetooth device collection.

6. The method according to claim 1, wherein in the case where the target Bluetooth device collection is a Bluetooth device collection to which the first electronic device has already added, the obtaining target set identity information, comprises:
obtaining set identity information currently configured by the first electronic device as the target set identity information.

7. The method according to any one of claims 1 to 4 and 6, wherein before obtaining the target set identity information, the method further comprises:
receiving a first instruction sent by a second electronic device, wherein the first instruction is sent by the second electronic device in response to a first trigger operation; and
establishing a communication connection between the first electronic device and the first Bluetooth device according to the first instruction.

8. The method according to claim 7, wherein the first electronic device comprises a first headphone, the first Bluetooth device comprises a second headphone, and the second electronic device comprises a headphone box;
the receiving a first instruction sent by a second electronic device, comprises:
receiving the first instruction sent by the headphone box in the case where the first headphone and the second headphone are placed in the headphone box, wherein the first instruction is sent by the headphone box in response to the first trigger operation.

9. The method according to any one of claims 1 to 4, wherein the obtaining target set identity information, comprises:
obtaining the target set identity information in response to a second trigger operation.

10. The method according to claim 9, wherein the first electronic device comprises a headphone box, and the first Bluetooth device comprises a second headphone; and the obtaining the target set identity information in response to a second trigger operation, comprises:
obtaining the target set identity information in response to the second trigger operation in the case where the second headphone is placed in the headphone box.

11. The method according to claim 9, wherein the first electronic device comprises a terminal device that establishes a Bluetooth communication connection with the first Bluetooth device, and the Bluetooth communication connection comprises a classic Bluetooth connection, a BLE connection, or a low energy (LE) Audio Bluetooth connection; and
the second trigger operation comprises a selection operation for the first Bluetooth device detected by the terminal device, and the selection operation is configured to indicate configuring the first Bluetooth device.

12. The method according to any one of claims 1 to 4, wherein the target set identity information comprises a target set identity resolving key (SIRK).

13. The method according to claim 12, wherein after sending the target set identity information to the first Bluetooth device, the method further comprises:
receiving a LE Audio broadcast signal sent by a second Bluetooth device;
determining whether the first Bluetooth device and the second Bluetooth device belong to the same Bluetooth device collection according to the LE Audio broadcast signal sent by the second Bluetooth device;
in response to the first Bluetooth device and the second Bluetooth device belonging to the same Bluetooth device collection, audio data is output synchronously to the first Bluetooth device and the second Bluetooth device respectively.

14. The method according to claim 13, wherein the LE Audio broadcast signal sent by the second Bluetooth device comprises target specific broadcast information and a target field, and the determining whether the first Bluetooth device and the second Bluetooth device belong to the same Bluetooth device collection according to the LE Audio broadcast signal sent by the second Bluetooth device, comprises:
obtaining a target local value by calculating according to the target SIRK corresponding to the first Bluetooth device and the target specific broadcast information; and
in response to the target local value being the same as the target field, it is determined that the first Bluetooth device and the second Bluetooth device belong to the same Bluetooth device collection.

15. A Bluetooth device configuration method, **characterized in that** the method is performed by a first Bluetooth device, and the method comprises:
receiving target set identity information sent by a first electronic device, wherein the target set identity information is configured to indicate a target Bluetooth device collection; and
configuring set identity information of the first Bluetooth device as the target set identity information.

16. The method according to claim 15, wherein the configuring set identity information of the first Bluetooth device as the target set identity information, comprises:
determining whether the set identity information currently configured by the first Bluetooth device is the same as the target set identity information;
in response to the set identity information currently configured by the first Bluetooth device being different from the target set identity information, configuring the set identity information of the first Bluetooth device as the target set identity information.

17. The method according to claim 15, wherein the target set identity information is generated by the first electronic device according to a preset method; or
the target set identity information is set identity information stored in the first electronic device; or
the target set identity information is set identity information that is currently configured by a second Bluetooth device and obtained by the first electronic device, and the second Bluetooth device is any Bluetooth device in the target Bluetooth device collection.

18. The method according to claim 17, wherein in the case where the target set identity information is generated by the first electronic device according to the preset method, the target set identity information is generated by the first electronic device based on a target BLE address; the target BLE address comprises any one of a BLE address of the first electronic device, a BLE address of the first Bluetooth device, and a BLE address of a third Bluetooth device; and the third Bluetooth device is a Bluetooth device to be added to the target Bluetooth device collection; or
the target set identity information is randomly generated by the first electronic device.

19. The method according to any one of claims 15 to 18, wherein in the case where the target Bluetooth device collection is a Bluetooth device collection to which the first electronic device is to be added, the first electronic device is further configured to configure the set identity information of the first electronic device as the target set identity information.

20. The method according to claim 15, wherein in the case where the target Bluetooth device collection is a Bluetooth device collection to which the first electronic device has already added, the target set identity information is the set identity information currently configured by the first electronic device.

21. The method according to any one of claims 15 to 18 and 20, wherein before receiving the target set identity information sent by the first electronic device, the method further comprises:
receiving a first instruction sent by a second electronic device, wherein the first instruction is sent by the second electronic device in response to a first trigger operation; and
establishing a communication connection between the first electronic device and the first Bluetooth device according to the first instruction.

22. The method according to claim 21, wherein the first electronic device comprises a first headphone, the first Bluetooth device comprises a second headphone, and the second electronic device comprises a headphone box;
the receiving a first instruction sent by a second electronic device, comprises:
receiving the first instruction sent by the headphone box in the case where the first headphone and the second headphone are placed in the headphone box, wherein the first instruction is sent by the headphone box in response to the first trigger operation.

23. The method according to any one of claims 15 to 18, wherein the first Bluetooth device comprises a second headphone, and the first electronic device comprises a headphone box; or
the first electronic device comprises a terminal device that establishes a Bluetooth communication connection with the first Bluetooth device.

24. The method according to any one of claims 15 to 18 and 20, wherein the target set identity information comprises a target set identity resolving key (SIRK).

25. The method according to claim 24, wherein after configuring the set identity information of the first Bluetooth device as the target set identity information, the method further comprises:
sending a LE Audio broadcast signal to the first electronic device based on the target SIRK.

26. The method according to claim 25, wherein the LE Audio broadcast signal comprises the target SIRK, or a target field calculated based on the target SIRK.

27. A Bluetooth device configuration apparatus, **characterized in that** the Bluetooth device configuration apparatus is performed by a first electronic device, and the Bluetooth device configuration apparatus comprises:
an identity acquisition module, configured to obtain target set identity information; and
an identity sending module, configured to send the target set identity information to a first Bluetooth device, so that the first Bluetooth device configures set identity information as the target set identity information, and the target set identity information is configured to indicate a target Bluetooth device collection.

28. A Bluetooth device configuration apparatus, **characterized in that** the Bluetooth device configuration apparatus is performed by a first Bluetooth device, and the Bluetooth device configuration apparatus comprises:
an identity receiving module, configured to receive target set identity information sent by the first electronic device, wherein the target set identity information is configured to indicate a target Bluetooth device collection; and
a configuration module, configured to configure set identity information of the first Bluetooth device as the target set identity information.

29. An electronic device, **characterized by** comprising:
a processor; and
a memory, storing a computer program, wherein in response to the computer program being executed by the processor, the method of any one of claims 1 to 14 or any one of claims 15 to 26 is implemented.

30. A computer-readable storage medium storing a computer program, **characterized in that** in response to the computer program is executed by a processor, the method of any one of claims 1 to 14 or any one of claims 15 to 26 is implemented.
